# EUROPEAN PATENT SPECIFICATION

(11) **EP 0 858 731 B1**
(45) Date of publication and mention of the grant of the patent: **29.05.2002**
(21) Application number: 97102391.6
(22) Date of filing: 14.02.1997
(51) Int. Cl.: A01D 34/68

(54) **Transmission for self-propelled walking lawn mowers**
Transmission für selbstangetriebene Rasenmäher
Transmission pour tondeuses à gazon autotractées

(43) Date of publication of application: 19.08.1998
(73) Proprietor: KANZAKI KOKYUKOKI MFG. CO., LTD., Amagasaki-Shi, Hyogo-Ken (JP); Tuff Torq Corporation, Morristown, TN 37814-1051 (US)
(72) Inventor: Kawada, Hirohiko, Amagasaki-shi (JP); McCloud, Travis, Morristown, TN 37814-1051 (US)
(74) Representative: Lhuillier, René

(56) References cited:
- GB-A- 2 130 538
- GB-A- 2 148 419
- US-A- 2 764 268
- US-A- 4 841 794
- US-A- 4 896 487
- US-A- 4 907 401
- PATENT ABSTRACTS OF JAPAN vol. 013, no. 224 (C-599), 24 May 1989 & JP 01 037215 A (KUBOTA LTD), 7 February 1989,
- PATENT ABSTRACTS OF JAPAN vol. 017, no. 693 (C-1144), 17 December 1993 & JP 05 236817 A (ISEKI & CO LTD), 17 September 1993,
- PATENT ABSTRACTS OF JAPAN vol. 017, no. 663 (C-1138), 8 December 1993 & JP 05 219816 A (KUBOTA CORP), 31 August 1993,

## Description

### BACKGROUND OF THE INVENTION

The present invention relates to a transmission that transmits the rotation of an engine to mower wheels with a reduced rotational speed, and more particularly to a transmission for use in self-propelled walking lawn mowers.

This kind of transmission is disclosed in, for example, Japanese Unexamined utility Model Publication No. 31939/1990 and Japanese Examined Utility Model Publication No. 1538/1995. Generally, these transmissions were the type that reduces the rotational speed of the output shaft than that of the input shaft via transmission gears. More specifically, these transmissions were the low-speed and high-torque type that obtains a large amount of torque at the output shaft.

However, since all the conventional transmissions had a clutch being mounted on the output shaft which generates a high torque, a great deal of load was imposed on the clutch. Accordingly, the clutch was easily worn or damaged, which resulted in a short service life of the transmission.

To ensure a satisfactory increased service life of the transmission by avoiding wear, damage etc. of the clutch, the clutch will inevitably be large-sized, whereby the reduction of the whole transmission size can not be achieved.

US-A 4 896 487 teaches a lawn mower having, on the one hand, an input shaft connected to a transmission mechanism, and the other hand, a clutch connected to an intermediate shaft with a drive gear, a driven gear and an output shaft.

GB-A 2 130 538 teaches a lawn mower having an input shaft with a drive gear, while a driven gear, connected to an output wheel shaft, is driven through a gear.

Patent Abstracts of Japan, vol. 013, n° 224 teaches a lawn mower having an input shaft with gears meshed together, and a driven shaft associated with a clutch, for driving wheels.

It is therefore an object of the present invention to provide a transmission for self-propelled walking lawn mowers, which transmission can reduce the wear or damage of a clutch by reducing the load imposed on the clutch and also can be made compact by reducing the size of the clutch.

Further, it is another object of the present invention to stably support an input shaft introduced into a casing while maintaining the casing compact.

### SUMMARY OF THE INVENTION

In order to attain the above objects, the present invention provides a transmission for self-propelled walking lawn mowers comprising :
a casing ;
an input shaft connected to a drive source and extending within the casing ;
an output shaft penetrating the casing horizontally ;
an intermediate shaft disposed in parallel to the output shaft and connected to the input shaft via a transmission gear mechanism ;
at least one drive gear mounted on the intermediate shaft ;
a driven gear set comprising at least one gear and being mounted on the output shaft to mesh with the drive gear ;
characterized by the fact that a clutch is mounted on the intermediate shaft to engage and disengage the drive gear with and from the intermediate shaft ;
the intermediate shaft comprises a first end supported by the casing and a second end terminating inside the casing ;
the transmission gear mechanism comprises a driven gear fixedly mounted at the second end of the intermediate shaft and an input gear disposed between the driven gear and a wall of the casing facing said driven gear, said input gear being fixedly mounted on the input shaft to mesh with the driven gear ;
the input shaft extends from the top wall to the bottom wall of the casing on the side of the second end of the intermediate shaft and perpendicular to the intermediate shaft and is supported by these walls ; and
the intermediate shaft is supported near the second end thereof by a supporting member disposed in the casing.

### BRIEF DESCRIPTION OF THE DRAWINGS

FIG. **1** is a perspective view schematically showing the internal structure of a self-propelled walking lawn mower provided with the transmission of the present invention;
FIG. **2** is a traverse cross section showing an embodiments of the transmission of the present invention for self-propelled walking lawn mowers;
FIG. **3** is a partially cutaway front elevation of the transmission of FIG. **2**; and
FIG. **4** is a partially cutaway side elevation of the transmission of FIG. **2**.

### DETAILED DESCRIPTION OF THE PREFERRED EMBODIMENTS

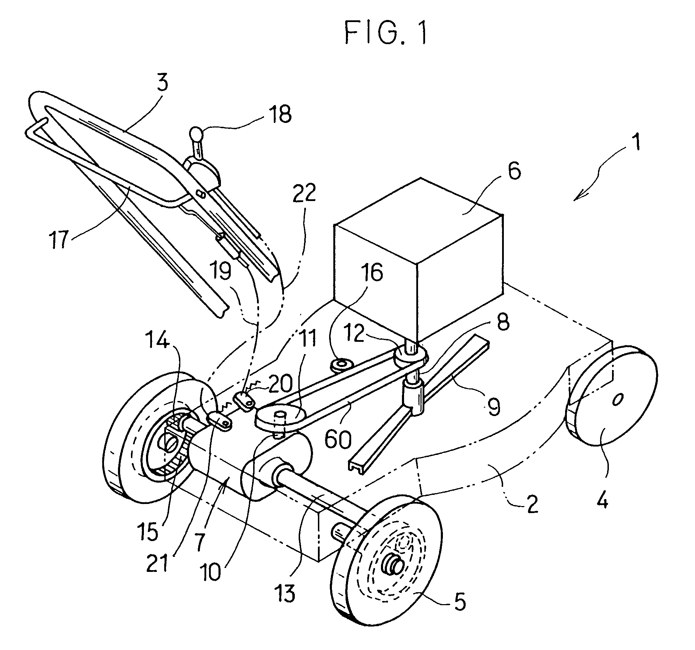

The preferred embodiments of the transmission of the present invention for self-propelled walking lawn mowers will now be described below with reference to FIGS. **1** - **4**.

FIG. **1** schematically shows the inside of a self-propelled walking lawn mower **1** on which the transmission of the present invention is mounted. The lawn mower **1** comprises a deck **2** supporting the main body of the lawn mower **1**, and a handle **3** for manipulating the mower **1**, the deck **2** being provided with fore wheels **4, 4,** and rear wheels **5, 5**. Mounted inside the lawn mower **1** are a drive unit **6** and a transmission **7**. A blade **9** is attached at the end of a drive shaft **8** that extends downwardly from the drive unit **6**. A pulley **11** is fixedly mounted at the end of an input shaft **10** introduced into the inside of the transmission **7**. A belt **60** connects the pulley **11** with a pulley **12** fixedly mounted on the drive shaft **8**, whereby the driving force of the drive unit **6** is transmitted to the transmission **7**. An output shaft **13** passing through the transmission **7** horizontally has gears **14, 14** on the opposite ends, each gear meshing with each gear **15** provided on the rear wheels (drive wheels) **5**. The belt **60** is maintained taut by a tension roller **16**. The handle **3** is provided with a clutch lever **17** and a shift lever **18**. The clutch lever **17** is attached pivotally to the horizontal axles mounted near the upper end of the handle **3**. When the clutch lever **17** is grasped together with the handle **3**, a clutch cable **19** is tensioned, thereby pivoting a clutch arm **20** provided on the transmission **7**. The shift lever **18** for changing gears is connected via a gear cable **22** to a shift arm **21** provided on the transmission **7**. By operating the shift lever **18**, the shift arm **21** can be pivoted. The operations of the clutch and the speed change mechanism by gears will be described later.

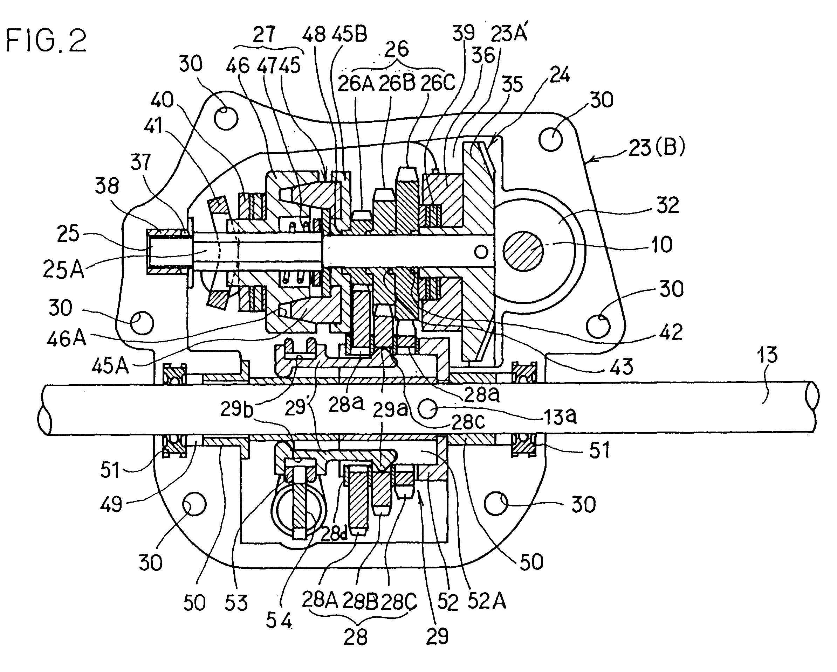

As shown in FIGS. **2 - 4**, the transmission **7** for self-propelled walking lawn mowers comprises a casing **23**, an input shaft **10** extending into the inside of the casing **23**, a transmission gear mechanism **24** for transmitting the driving force from the input shaft **10**, an intermediate shaft **25** being rotatably supported by the casing **23** to receive the driving force from the transmission gear mechanism **24**, an output shaft **13** being rotatably supported by the casing **23**, a drive gear set **26** being mounted on the intermediate shaft **25**, a clutch **27** being mounted on the intermediate shaft **25**, a driven gear set **28** which is in constant mesh with the drive gear set **26**, a connecting member **29** for selecting a gear having a desired speed reduction ratio from the driven gear set **28** and connecting the selected gear with the output shaft **13**.

The casing **23** consists of two parts, i.e., a upper casing half **23A** and a lower casing half **23B**. The casing halves **23A** and **23B** are mated along a mating plane which becomes substantially horizontal when the transmission **7** is mounted in the lawn mower **7**. The upper and lower casing halves **23A** and **23B** can be kept mated with bolts **31** being screwed into holes **30** that are formed in the peripheral flanges of the upper and lower casing halves **23A** and **23B** (only the holes of the lower casing half **23B** being shown in FIG. **2**).

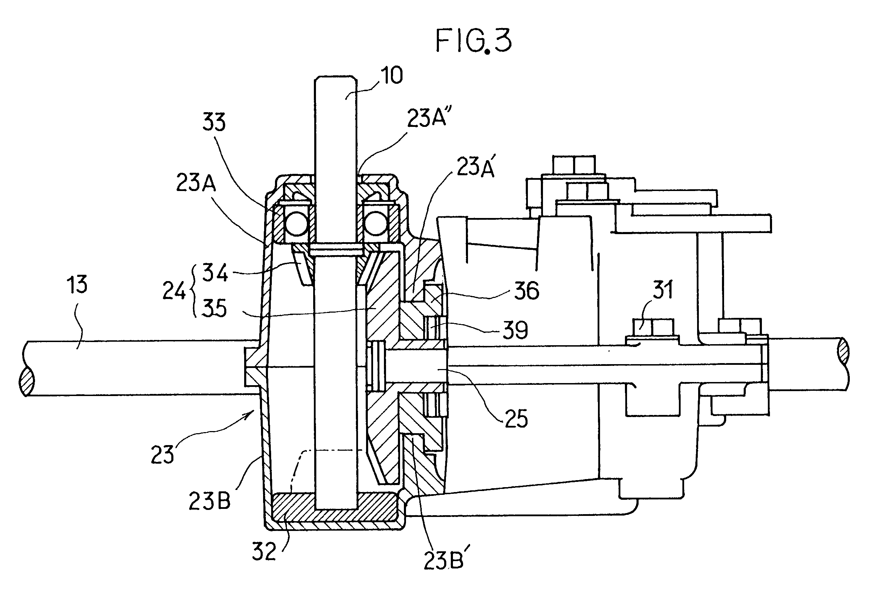

The input shaft **10** extends from an opening **23A"** formed in the top wall to the bottom wall of the casing **23** (FIG. **3**). The lower end of the input shaft **10** is supported by a bearing member **32** located on the bottom wall of the casing **23**, and the upper end of the input shaft **10** is supported by a bearing **33** provided below the opening **23A"**. As described, the input shaft **10** extends to reach the bottom wall of the casing **23**, and the lower end is supported by the bottom wall of the bearing member **32**, whereby the input shaft **10** can be stably supported without two bearings **33** as in a cantilevered input shaft as seen in conventional transmissions. Thus, it is possible to reduce the height dimension of the casing **23**.

Fixedly mounted on the input shaft **10** is a small gear **34**, and fixedly mounted at one end of the intermediate shaft **25** is a large gear **35** which is in mesh with the small gear **34**. These gears **34** and **35** constitute the transmission gear mechanism **24**. In this instance, the small and large gears **34** and **35** are bevel gears, and the axes of the input shaft **10** and the intermediate shaft **25** are disposed orthogonal to each other in the plane through the axes. The small gear **34** can be mounted on the input shaft **10** at a lower position of the casing **23** (as shown by a dash line in FIG. **3**). When the axes of the input shaft **10** and the intermediate shaft **25** are not in the same plane, the small and large gears **34** and **35** may be hypoid gears.

One end of the intermediate shaft **25** is supported near the large gear **35** by a supporting member **36** which extends from the inner wall of the casing **23**, and the other end of the intermediate shaft **25** is supported via a bush 38 fitted in a recess **37** formed on the casing **23**. The supporting member **36** is held between brackets **23A'** and **23B'** which are formed respectively on the upper and lower casing halves **23A** and **23B** in such a manner that they may face the inside of the casing **23**.

Starting with the large gear **35**, mounted on the intermediate shaft **25** are the supporting member **36**, a thrust bearing **39**, a first, second and third drive gears **26A**, **26B** and **26C**, the clutch **27** and a thrust washer **40**. A clutch fork **41** can contact the thrust washer **40** with its blades which are disposed on both sides of the intermediate shaft **25**.

The first, second and third drive gears **26A**, **26B** and **26C** are axially slidable along and rotatable about the intermediate shaft **25**. The respective drive gears are provided with a hexagonal recess **42** around their center holes (in FIG. **2**, only the hexagonal recess of the third drive gear **26C** being denoted by **42**) and a projection **43** for meshing with the recess **42** on the oppositely facing drive gear. The recess **42** and the projection **43** are fitted with each other, so the first to third drive gears **26A** - **26C** rotate together.

The clutch **27** in contact with a side face of the first drive gear **26A** comprises a clutch disk **45** consisting of an annular clutch cone **45A** and a cone carrier **45B**, a concave member **46** having an annular recess **46A** which can frictionally contact the clutch cone **45A**, and a compression spring (clutch spring) **47** interposed between the clutch disk 45 and the concave member **46**.

The clutch cone **45A** is coupled with the cone carrier **45B** in a dog-clutch manner. The cone carrier **45B** is provided with a recess **48**, with which the hexagonal projection formed on the third drive gear **26C** is fitted. The clutch disk **45** is slidably mounted longitudinally along and rotatably about the intermediate shaft **25**.

The left side part **25A** of the intermediate shaft **25** shown in FIG. **2** has a hexagonal cross-section to mount the concave member 46 thereon. The diameter of the hexagonal part **25A** is larger than that of the other part of the shaft **25**, and the clutch disk **45** abuts on one of the end faces of the hexagonal part **25A**. The concave member **46** can slide along the intermediate shaft **25**, but is prevented from rotating about the hexagonal part **25A**, so that the concave member **46** can rotate with the intermediate shaft **25**.

The compression spring **47** forces the clutch disc **45** away from the concave member **46**, i.e., forces the clutch disk **45** in such a direction as to disengage the clutch. Accordingly, when the clutch fork **41** is out of operation, the drive gear set **26** runs idle. In this state, the thrust force applied on the supporting member **36** by the clutch spring **47** is set larger than that from the large gear **35** which is in pressure contact with the small gear **34**. When the clutch fork **41** is operated to press the concave member **46**, the clutch disc **45** frictionally engages with the second concave member **46**.

By this frictional engagement, the rotational force of the intermediate shaft **25** is transmitted via the clutch **27** to the drive gear set **26**. The clutch **27** to be used in the invention is not limited to the above-mentioned type, but may be another type such as a ball clutch, dog clutch, etc..

The driven gear set **28** meshing with the drive gear set **26** lies idle on the output shaft **13**. The output shaft **13** is inserted into and supported by bushes **50** which are fitted in semicircular recesses **49** formed on the upper and lower casing halves **23A** and **23B**, respectively. In the figure, the reference numeral **51** denotes an oil seal.

The driven gear set **28** consists of a low gear **28A**, a second gear **28B** and a third gear **28C** which are in constant mesh with a first drive gear **26A**, a second drive gear **26B**, and a third drive gear **26C**, respectively.

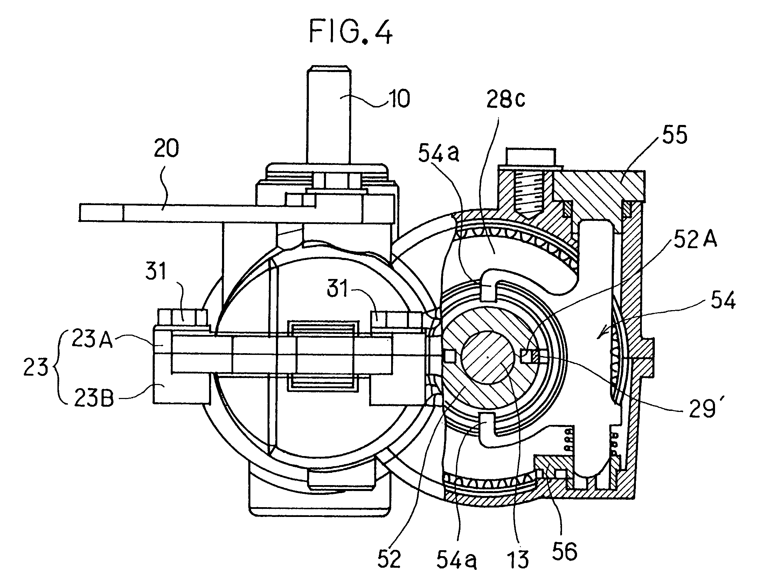

One gear is selected from among the driven gear set **28**, and the selected gear is then connected to the output shaft **13** by means of the connecting means **29**. The connecting means **29**, as shown in FIGS. **2** and **4**, may be of the key type. This connecting means **29** may comprise a fixed sleeve **52** fixedly mounted on the output shaft **13** by means of a pin **13a** and a pair of shifter keys **29'** inserted into a pair of longitudinal grooves **52A** axially formed on the fixed sleeve **52**. The driven gear set 28 is rotatably fitted on the fixed sleeve **52**. Formed around one end portion of the shifter key **29'** is a gear selecting projection **29a** which outwardly radically projects, and formed around the other end portion of the shifter key **29'** is a circumferential groove **29b** for securing a shifter sleeve **53**. The gears **28A** - **28C** are provided with key ways **28a**, **28b** and **28c**, respectively, with each of which the projection **29a** can engage selectively. As shown in FIGS. **2** and **4**, a shifter fork extends vertically in the casing **23** and comprises upper and lower fingers **54a**, each end of which engages the shifter sleeve **53.**

The upper end of the shifter fork **54**, as shown in FIG. **4**, is secured to a boss **55** which is rotatably attached on the casing **23**, and the lower end of the shifter fork **54** is fitted in a bush **56** provided on the bottom of the casing **23,** so that the shifter fork **54** is rotatably supported. An arm **21** as shown in FIG. **1** is secured at the boss **55**, so that when the shift lever **18** is operated to tension a speed change cable **22** and then pivot the shift arm **21** with the boss **55**, i.e., the shifter fork **54.** When the shifter fork **54** is pivoted, the shifter key **29'** with which the finger **54a** engages via the shifter sleeve **53** is shifted axially along the output shaft **13**, so as to mesh with one of the driven gear set **28A**, **28B** or **28C** to be selected.

Attached on either side of the respective gears **28A**, **28B**, and **28C** are partition walls **28d** for maintaining the engagement of the selected gear with the shifter key **29'**. The projection **29a** of the shifter key **29'**, when axially shifting, brushes over the partition walls **28d** against the radial spring force of the shifter key **29'.**

The operation of the transmission of the invention for self-propelled walking lawn mowers will now be described below with reference to the embodiment.

When the drive unit **6** is started, the intermediate shaft **25** is rotated via the drive shaft **8**, the pulley **12**, the belt **60,** the pulley **11**, the input shaft **10** and the transmission gear mechanism **24**. The drive gear set **26** mounted on the intermediate shaft **25** is rotatable freely thereon when the clutch **27** is disengaged. At this time, the intermediate shaft **25** is idle with respect to the drive gear set **26**.

To connect the drive gear set **26** with the intermediate shaft **25**, the clutch **27** is frictionally engaged. When the clutch lever **17** is gripped together with the handle **3**, the clutch cable **22** is tensioned so as to operate the clutch arm **20** (FIGS. **1** and **4**). By the operation of the clutch arm **20**, the clutch fork **41** presses the concave member 46 via a thrust washer **40**, and then the concave member **46** frictionally engages the clutch cone **45A** against the spring force of the compression coil spring **47**, whereby the clutch disk **45** rotates. The hexagonal recesses **48** and **42** are adapted to be fitted with the projection **43** so that the rotation of the clutch disk **45** is transmitted to the drive gear set **26.** Thus, the clutch disk **45**, the concave member **46**, and the drive gear set **26** rotate with the intermediate shaft **25**.

When the rotational force of the input shaft **10** is transmitted to the drive gear set **26**, the driven gear set **28** in constant mesh with the drive gears **26** is rotated. For selecting a reduction gear ratio, the shifter fork **54** is pivoted so as to shift the shifter key **29'.** The shifter fork **54** is pivoted by operating the shift lever **18** (FIG. **1**). When the projection **29a** of the shifter key **29'** is connected with one gear to be selected from the driven gear set 28, the rotational force is transmitted only to the gear (the second gear **28B** in FIG. **2**) engaged with the shift key 29'. The rotational force of the selected gear (28B) is then transmitted to the output shaft 13 so as to drive the drive wheels 5 and 5 via the gears 14 and 15.

To stop the operation of the lawn mower, the clutch lever 17 is released to slack the clutch cable 19. Then, the concave member 46 is shifted away from the clutch cone **45A** by the spring force of the compression spring **47**, and the frictional engagement therebetween is released, so that the rotational force of the concave member 46 is not transmitted to the clutch cone 45A. Therefore, the drive gear set 26 does not rotate with the intermediate shaft 25. Thus, the rotation of the output shaft 13 is stopped and the lawn mower 1 stops traveling. Additionally, the partial slipping engagement of the clutch can also be realized by appropriately grasping the clutch lever 17.

As is apparent from the forgoing, the transmission of the present invention for self-propelled walking lawn mowers has the following advantages.

Much load is not imposed on the clutch 27, since the clutch 27 is not mounted on the output shaft 13 having a large torque, but on the intermediate shaft 25 having a torque smaller than the output shaft 13. Accordingly, the service life of the transmission is increased, and the clutch can be made compact so that the entire size of the transmission can be reduced.

The embodiment described above is a preferred embodiment of this invention, but equivalent embodiments will occur to those skilled in the art.

## Claims

1. A transmission for self-propelled walking lawn mowers comprising:
a casing (23) ;
an input shaft (10) connected to a drive source and extending within the casing (23) ;
an output shaft (13) penetrating the casing (23) horizontally ;
an intermediate shaft (25) disposed in parallel to the output shaft (13) and connected to the input shaft (10) via a transmission gear mechanism (24) ;
at least one drive gear (26) mounted on the intermediate shaft (25) ;
a driven gear set (28) comprising at least one gear and being mounted on the output shaft (13) to mesh with the drive gear (26) ;
the transmission gear mechanism (24) comprises a driven gear (35) fixedly mounted at the second end of the intermediate shaft (25) and an input gear (34) disposed between the driven gear (35) and a wall (23A) of the casing (23) facing said driven gear (35);
**characterized by** the fact that a clutch (27) is mounted on the intermediate shaft (25) to engage and disengage the drive gear (26) with and from the intermediate shaft (25) ;
the intermediate shaft (25) comprises a first end (25A) supported by the casing (23) and a second end terminating inside the casing (23) ;
said input gear (34) being fixedly mounted on the input shaft (10) to mesh with the driven gear (35) ;
the input shaft (10) extends from the top wall to the bottom wall of the casing (23) on the side of the second end of the intermediate shaft (25) and perpendicular to the intermediate shaft (25) and is supported by these walls ; and
the intermediate shaft (25) is supported near the second end thereof by a supporting member disposed in the casing (23).

2. The transmission according to claim 1, wherein the clutch (27) is a cone-shaped clutch.

3. The transmission according to claim 1, wherein the clutch (27) is a dog clutch.

4. The transmission according to one of claims 1 to 3, wherein the transmission gear mechanism (24) comprises an input gear (34) mounted on the input shaft (10) and a driven gear (35) disposed at one end of the intermediate shaft (25) to mesh with input gear (34), wherein another transmission gear mechanism (26, 28) is provided for connecting the intermediate shaft (25) to the output shaft (13), and wherein the casing (23) consists of two mating halves between which the output shaft (13) is held.

5. The transmission according to claim 4, wherein the other transmission gear mechnism includes a driven gear set (28) mounted on the output shaft (13).

6. The transmission according to claim 5, wherein the axes of the intermediate shaft (25), with the clutch (27), and of the output shaft (13), with the driven gear set (28), are disposed on a mating plane between the two casing halves.

7. The transmission according to one of the claims 1 to 6, wherein the at least one gear belongs to a plurality of drive gears (26), each of them being provided with a projection and a recess (48), the projection on one of the drive gears (26) being adapted to fit with the recess (48) formed on the oppositely facing drive gear (26), so that the rotational force from the clutch (27) is transmitted to all the drive gears (26).

## Patentansprüche

1. Getriebe für selbstfahrende Schiebe-Rasenmäher, das umfasst:
ein Gehäuse (23);
eine Eingangswelle (10), die mit einer Antriebsquelle verbunden ist und sich in dem Gehäuse (23) erstreckt;
eine Ausgangswelle (13), die das Gehäuse (23) horizontal durchdringt;
eine Zwischenwelle (25), die parallel zu der Ausgangswelle (13) angeordnet und über einen Zwischengetriebemechanismus (24) mit der Eingangswelle (10) verbunden ist;
wenigstens ein Antriebsrad (26), das auf der Zwischenwelle (25) angebracht ist;
einen angetriebenen Radsatz (28), der wenigstens ein Rad umfasst, auf der Ausgangswelle (13) angebracht und mit dem Antriebsrad (26) in Eingriff ist;
wobei der Zwischengetriebemechanismus (24) ein angetriebenes Rad (35), das fest am zweiten Ende der Zwischenwelle (25) angebracht ist, und ein Eingangsrad (34) umfasst, das zwischen dem angetriebenen Rad (35) und einer Wand (23A) des Gehäuses (23) angeordnet ist, die dem angetriebenen Rad (35) zugewandt ist;
**dadurch gekennzeichnet, dass** eine Kupplung (27) auf der Zwischenwelle (25) angebracht ist und das Antriebsrad (26) in und außer Eingriff mit der Zwischenwelle (25) bringt;
die Zwischenwelle (25) ein erstes Ende (25A), das von dem Gehäuse (23) getragen wird, und ein zweites Ende umfasst, das im Inneren des Gehäuses (23) endet;
das Eingangsrad (34) fest auf der Eingangswelle (10) angebracht ist und mit dem angetriebenen Rad (35) in Eingriff ist;
die Eingangswelle (10) sich von der oberen Wand zur unteren Wand des Gehäuses (23) auf der Seite des zweiten Endes der Zwischenwelle (25) und senkrecht zu der Zwischenwefle (25) erstreckt und von diesen Wänden getragen wird; und
die Zwischenwelle (25) in der Nähe ihres zweiten Endes von einem Trageelement getragen wird, das in dem Gehäuse (23) angeordnet ist.

2. Getriebe nach Anspruch 1, wobei die Kupplung (25) eine kegelförmige Kupplung ist.

3. Getriebe nach Anspruch 1, wobei die Kupplung (27) eine Klauenkupplung ist.

4. Getriebe nach einem der Ansprüche 1 bis 3, wobei der Zwischengetriebemechanismus (24) ein Eingangsrad (34), das auf der Eingangswelle (10) angebracht ist, und ein angetriebenes Rad (35) umfasst, das an einem Ende der Zwischenwelle (25) angeordnet ist und mit dem Eingangsrad (34) in Eingriff ist, wobei ein weiterer Zwischengetriebemechanismus (26, 28) vorhanden ist, der die Zwischenwelle (25) mit der Ausgangswelle (13) verbindet, und wobei das Gehäuse (23) aus zwei zusammenpassenden Hälften besteht, zwischen denen die Ausgangswelle (13) gehalten wird.

5. Getriebe nach Anspruch 4, wobei der weitere Zwischengetriebemechanismus einen angetriebenen Radsatz (28) enthält, der auf der Ausgangswelle (13) angebracht ist.

6. Getriebe nach Anspruch 5, wobei die Achsen der Zwischenwelle (25) mit der Kupplung (27) und der Ausgangswelle (13) mit dem angetriebenen Radsatz (28) auf einer Passebene zwischen den zwei Gehäusehälften angeordnet sind.

7. Getriebe nach einem der Ansprüche 1 bis 6, wobei das wenigstens eine Rad zu einer Vielzahl von Antriebsrädern (26) gehört und jedes von ihnen mit einem Vorsprung und einer Vertiefung (48) versehen ist, und wobei der Vorsprung an einem der Antriebsräder (26) in die Vertiefung (48) passt, die an dem gegenüberliegend ausgerichteten Antriebsrad (26) ausgebildet ist, so dass die Drehkraft von der Kupplung (27) auf alle Antriebsräder (26) übertragen wird.

## Revendications

1. Transmission de tondeuse auto-motrice, comprenant :
un carter (23),
un arbre d'entrée (10) relié à une source motrice et s'étendant dans le carter (23),
un arbre de sortie (13) pénétrant horizontalement dans le carter (23),
un arbre intermédiaire (25) disposé en parallèle avec l'arbre de sortie (13) et relié à l'arbre d'entrée (10) via un mécanisme d'engrenage de transmission (24),
au moins un engrenage menant (26) monté sur l'arbre intermédiaire (25),
un ensemble d'engrenages menés (28) comprenant au moins un engrenage et monté sur l'arbre de sortie (13) pour engrener avec l'engrenage menant (26),
le mécanisme d'engrenage de transmission (24) comprenant un engrenage mené (35) monté de façon fixe à la seconde extrémité de l'arbre intermédiaire (25) et un engrenage d'entrée (34) disposé entre l'engrenage mené (35) et une paroi (23A) du carter (23) en regard de l'engrenage mené (35),
**caractérisée par le fait qu'**un embrayage (27) est monté sur l'arbre intermédiaire (25) pour accoupler et désaccoupler l'engrenage menant (26) à, et de, l'arbre intermédiaire (25),
l'arbre intermédiaire (25) comprenant une première extrémité (25A) portée par le carter (23) et une seconde extrémité se terminant à l'intérieur du carter (23),
l'engrenage d'entrée (34) étant monté de façon fixe sur l'arbre d'entrée (10) pour engrener avec l'arbre mené (35),
l'arbre d'entrée (10) s'étendant depuis la paroi de dessus jusqu'à la paroi de fond du carter (23) du côté de la seconde extrémité de l'arbre intermédiaire (25) et perpendiculairement à l'arbre intermédiaire (25) et étant supporté par ces parois, et
l'arbre intermédiaire (25) est supporté près de sa seconde extrémité par un élément support disposé dans le carter (23).

2. Transmission selon la revendication 1, dans laquelle l'embrayage (27) est un embrayage de forme conique.

3. Transmission selon la revendication 1, dans laquelle l'embrayage (27) est un embrayage à crabot.

4. Transmission selon l'une des revendications 1 à 3, dans laquelle le mécanisme d'engrenage de transmission (24) comprend un engrenage d'entrée (34) monté sur l'arbre d'entrée (10) et un engrenage mené (35) disposé à une extrémité de l'arbre intermédiaire (25) pour engrener avec l'engrenage d'entrée (34), et où un autre mécanisme d'engrenage de transmission (26, 28) est installé pour relier l'arbre intermédiaire (25) à l'arbre de sortie (13), et où le carter (23) consiste en deux moitiés appariées entre lesquelles est maintenu l'arbre de sortie (13).

5. Transmission selon la revendication 4, dans laquelle l'autre mécanisme d'engrenage de transmission comporte un ensemble d'engrenages menés (28) monté sur l'arbre de sortie (13).

6. Transmission selon la revendication 5, dans laquelle les axes de l'arbre intermédiaire (25), avec l'embrayage (27), et de l'arbre de sortie (13), avec l'ensemble d'engrenages menés (28), sont situés sur un plan de joint entre les deux moitiés du carter.

7. Transmission selon l'une des revendications 1 à 6, dans laquelle le au moins un engrenage appartient à une pluralité d'engrenages menants (26), chacun d'entre eux comportant une saillie et une cavité (48), la saillie sur l'un des engrenages menants (26) étant agencée pour correspondre à la cavité (48) formée sur l'engrenage en regard (26), de sorte que la force rotative issue de l'embrayage (27) est transmise à tous les engrenages menants (26).
